# EUROPÄISCHE PATENTSCHRIFT

(11) **EP 2 953 989 B1**
(45) Veröffentlichungstag und Bekanntmachung des Hinweises auf die Patenterteilung: **03.05.2017**
(21) Anmeldenummer: 14700337.0
(22) Anmeldetag: 07.01.2014
(51) Int. Cl.: C08G 18/76, C08G 18/20, C08G 18/28, C08G 18/48, C08G 101/00

(54) **AMINE, GEEIGNET ZUR VERWENDUNG BEI DER HERSTELLUNG VON POLYURETHANEN**
AMINES, SUITABLE FOR THE USE IN THE PRODUCTION OF POLYURETHANES
AMINES, CONVENANT POUR UNE UTILISATION À LA PRÉPARATION DE POLYURÉTHANES

(30) Priorität: 05.02.2013 DE 102013201829
(43) Veröffentlichungstag der Anmeldung: 16.12.2015
(73) Patentinhaber: Evonik Degussa GmbH, 45128 Essen (DE)
(72) Erfinder: SCHMITZ, Sarah, 47198 Duisburg (DE); GLOS, Martin, 46325 Borken (DE); HUBEL, Roland, 45136 Essen (DE); TERHEIDEN, Annegret, 46519 Alpen (DE)
(86) Internationale Anmeldenummer: PCT/EP2014/050123
(87) Internationale Veröffentlichungsnummer: WO 2014/121959

(56) Entgegenhaltungen:
- EP-A1- 0 495 249
- WO-A1-2005/118668
- DE-A1- 19 930 098
- US-A1- 2005 059 749

## Beschreibung

Gegenstand der vorliegenden Erfindung ist die Verwendung von stickstoffhaltigen Verbindungen der Formel (I) oder entsprechende quaternisierte oder protonierte Verbindungen, zur Herstellung von Polyurethanen, Zusammensetzungen, die diese Verbindungen enthalten sowie Polyurethansysteme, die unter Verwendung der Verbindungen erhalten wurden.

### Stand der Technik:

Die Verwendung von tertiären Aminen bei der Herstellung von Polyurethanen ist bekannt. Dabei wird eine Vielzahl von strukturell unterschiedlichen Aminen als Katalysatoren eingesetzt.

Als Polyurethane werden hier alle Reaktionsprodukte ausgehend von Isocyanaten und entsprechend isocyanat-reaktiven Molekülen verstanden. Dies umfasst auch Polyisocyanurate, Polyharnstoffe, Allophanate, Biurete, usw. Bevorzugt ist die Verwendung der tertiären Amine bei der Herstellung von Polyisocyanat-Polyadditionsprodukten.

Besonders bei der Herstellung von Polyurethanschäumen (PU-Schäumen) spielen tertiäre Amine eine wichtige Rolle, da hier die sogenannte Treibreaktion - Wasser reagiert mit Isocyanat unter Bildung von Kohlendioxid als Treibgas - und die Gelreaktion - Polyole reagieren mit Isocyanaten zu Urethanen, was zu einer Steigerung der Molmasse und entsprechender Vergelung führt - genau aufeinander abgestimmt sein müssen, damit ein qualitativ hochwertiger Schaum entstehen kann.

Als großes Problem ist in der Literatur das Auftreten von Emissionen unter anderem durch die Katalyse bedingte Emissionen aus dem fertigen PU-Schaum bekannt.

Als mögliche Lösung zur Verminderung der Aminemissionen aus PU-Schäumen beschreibt EP 1977826 die Verwendung von N,N,N'-trimethyl-bis-(aminoethyl)etherderivaten als Katalysatoren bei der Polyurethanschaumherstellung. Diese Verbindungen werden durch Reaktion von Glycidylether und Glycidylester mit Ether-Verbindungen, umfassend N,N,N'-Trimethylbis-(aminoethyl)ether, N,N,N'-trimethyl-bis-(aminoethyl)ether und Derivate davon, hergestellt.

US 2005/0059749 beschreibt Propionamide, die durch Reaktion (Michael-Addition) von Bis(dimethylaminopropyl)amin mit Acrylamid-Derivaten hergestellt werden, und als Katalysatoren mit niedrigen Emissionen zur Herstellung von PU-Schäumen dienen.

EP 1038896 beschreibt Propionamide, die durch Reaktion (Michael-Addition) von Dimethylaminopropylamin mit Acrylamid-Derivaten hergestellt werden, und als Katalysatoren mit niedrigen Emissionen zur Herstellung von PU-Schäumen dienen.

EP 1299445 beschreibt Katalysatoren für die Herstellung von Polyisocyanat-Additionsprodukten, die neben der tertiären Amin-Funktionalität noch eine Gruppe enthalten, die nach der Hydrolyse das Amin komplexiert oder protoniert. Es handelt sich hierbei um Michael-Additionsprodukte von - gegebenenfalls OH-Gruppen tragenden - sekundären Aminen an ungesättigte Carbonsäureester, wobei die Estereinheiten dann hydrolysieren können.

WO 2012072441 beschreibt neue emissionsarme Katalysatoren auf Basis von Strukturen, die Dialkylaminalkoxyalkyl- und NH-Fuktionalitäten enthalten.

DE 102007046860 beschreibt Katalysatoren auf Basis von Aminen, die die Emissionen von Dimethylformamid (DMF) reduzieren und die Rekatalyseneigung vermindern. Der hier beschriebene Katalysator muss allerdings in relativ hohen Konzentrationen eingesetzt werden, um eine genügend schnelle Verschäumung zu erzielen.

US5478494 beschreibt ein Verfahren zur Herstellung von PU-Schäumen unter Verwendung von tert. Aminen, wie z. B. Piperazine und Imidazole, als katalytisch aktive Substanzen.

EP 1457507 beschreibt die Verwendung von tertiären Aminen, die Hydroxyfunktionen enthalten, welche durch Addition von Glycidether an eine sekundäre Amin-Funktionalität hergestellt werden. Als Ausgangsprodukt werden z. B. N-Methylpyrrolidine beschrieben.

EP 1435365 beschreibt die Verwendung von tertiären Amin-Amid Katalysatoren, die durch Umsetzung von organischen Säuren an einer sekundären Amin-Funktionalität hergestellt werden. Als Ausgangsprodukt beschriebenen Amine sind z. B. N-Methylpyrrolidine.

Die Herstellung der genannten Amine ist teilweise aufwändig und es besteht der Bedarf an weiteren alternativen Aminen, die zur Herstellung von Polyurethanen und PU-Schäumen mit geringen Amin- oder anderen Emission geeignet sind, um Katalysatoren bereit stellen zu können, die mehr die Treib- oder mehr die Gelreaktion vorantreiben.

Aufgabe der vorliegenden Erfindung war die Bereitstellung eines alternativen Katalysators zur Herstellung von Polyurethanschäumen.

Überraschenderweise wurde gefunden, dass Verbindungen der nachfolgenden Formel (I) oder die entsprechenden quaternisierten oder protonierten Verbindungen diese Aufgabe lösen.

Gegenstand der vorliegenden Erfindung ist deshalb die Verwendung der Verbindungen der Formel (I) oder der entsprechenden quaternisierten oder protonierten Verbindungen bei der Herstellung von Polyurethanen und PU-Schäumen sowie entsprechende Zusammensetzungen, die die Verbindungen der Formel (I) oder die entsprechenden quaternisierten oder protonierten Verbindungen aufweisen.

Die erfindungsgemäße Verwendung von Verbindungen der Formel (I) oder der entsprechenden quaternisierten oder protonierten Verbindungen führen zu einer Verminderung oder Vermeidung der katalysebedingten Emissionen. Insbesondere kann Diaminobicyclooctan (TA 33), einer der wichtigsten Katalysatoren in der PU Weichverschäumung durch einen Kat ersetzt werden, der ein ähnliches Steigprofil aufweist, aber eben keine Emission.

Die erfindungsgemäß verwendeten Verbindungen der Formel (I) oder die entsprechenden quaternisierten oder protonierten Verbindungen können sowohl die Gel- als auch die Treib-Reaktion bei der Verschäumung katalysieren und erlauben dadurch eine Reduktion der Einsatzmengen eines üblichen Gel-Katalysators wie z.B. Zinn(II)ethylhexanoat.

Ein weiterer Vorteil besteht darin, dass die erfindungsgemäß verwendeten Verbindungen der Formel (I) oder die entsprechenden quaternisierten oder protonierten Verbindungen keine Dimethylamino-Gruppen aufweisen, so dass eine Aminkatalysator-bedingte Emission von Dimethylformamid (DMF) vermieden werden kann.

Die erfindungsgemäß hergestellten Schäume weisen vorzugsweise DMF-Emissionen von größer oder gleich 0 µg/m³ und kleiner oder gleich 5 µg/m³, vorzugsweise kleiner 1 µg/m³ und besonders bevorzugt kleiner 0,1 µg/m³ auf, ermittelt nach dem Prüfkammerverfahren DIN 13419-1, 24 Stunden nach Prüfkammerbeladung.

Die erfindungsgemäßen Gegenstände werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere in Bezug auf den Sachverhalt, in dessen Zusammenhang das Dokument zitiert wurde, vollständig zum Offenbarungsgehalt der vorliegenden Erfindung gehören. Bei Prozentangaben handelt es sich, wenn nicht anders angegeben, um Angaben in Gewichtsprozent. Werden nachfolgend Mittelwerte angegeben, so handelt es sich, wenn nicht anderes angegeben, um Gewichtsmittel. Werden nachfolgend Parameter angegeben, die durch Messung bestimmt wurden, so wurden die Messungen, wenn nicht anders angegeben, bei einer Temperatur von 25 °C und einem Druck von 101.325 Pa durchgeführt.

Unter Polyurethan (PU) wird im Rahmen der vorliegenden Erfindung ein Produkt erhältlich durch Reaktion von Isocyanaten und Polyolen bzw. Verbindungen mit Isocyanat-reaktiven Gruppen. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU im Sinne der vorliegenden Erfindung sowohl Polyurethan als auch Polyisocyanurat verstanden. Unter Polyurethanschaum (PU-Schaum) wird im Rahmen der vorliegenden Erfindung Schaum verstanden, der als Reaktionsprodukt basierend auf Isocyanaten und Polyolen bzw. Verbindungen mit Isocyanat-reaktiven Gruppen erhalten wird. Es können hierbei neben dem Namen gebenden, Polyurethan auch weitere funktionelle Gruppen gebildet werden, wie z.B. Allophanate, Biurete, Harnstoffe oder Isocyanurate. Daher werden unter PU-Schäumen im Sinne der vorliegenden Erfindung sowohl Polyurethanschäume (PUR-Schäume) als auch Polyisocyanurat-Schäume (PIR-Schäume) verstanden. Bevorzugte Polyurethanschäume sind Polyurethanhartschäume.

Die erfindungsgemäße Verwendung einer stickstoffhaltigen Verbindung bei der Herstellung von Polyurethanen, zeichnet sich dadurch aus, dass die Verbindung der Formel (I) genügt 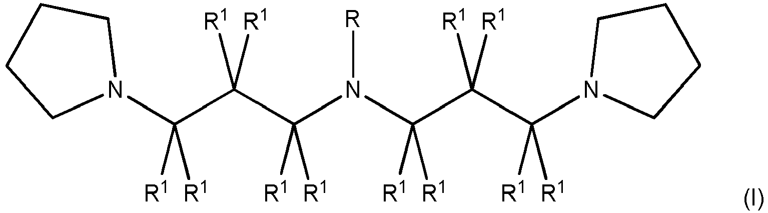 mit
R gleich oder verschieden Wasserstoff oder ein organischer Rest mit 1 bis 60, vorzugsweise 1 bis 30 Kohlenstoffatomen, der optional Heteroatome, wie z. B. Sauerstoff-, Stickstoff- und/oder Halogenatome, aufweisen kann,
R¹ gleich oder verschieden Wasserstoff oder organischer Rest mit 1 bis 30 Kohlenstoffatomen, der optional Sauerstoff-, Stickstoff- und/oder Halogenatome aufweisen kann, wobei der organische Rest vorzugsweise ein C₁- bis C₃₀-Alkyl-Rest ist, vorzugsweise ist R¹ Wasserstoff, bevorzugt sind alle R¹ Wasserstoff,
oder eine entsprechende quaternisierte oder protonierte Verbindung der Formel (I) ist.

Vorzugsweise genügt die verwendete Verbindung der Formel (I) der Formel (II) oder ist eine entsprechende quaternisierte oder protonierte Verbindung. 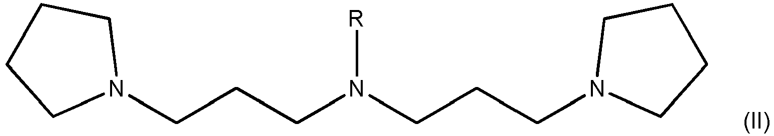 mit R wie oben definiert.

Zur Quaternisierung der Verbindungen der Formel (I) können alle als Quaternisierungsreagenz bekannten Reagenzien eingesetzt werden. Vorzugsweise werden als Quaternisierungsmittel Alkylierungsmittel, wie z. B. Dimethylsulfat, Methylchlorid oder Benzylchlorid, bevorzugt Methylierungsmittel wie insbesondere Dimethylsulfat verwendet. Ebenso kann mit Alkylenoxiden wie zum Beispiel Ethylenoxid, Propylenoxid oder Butylenoxid, vorzugsweise mit anschließender Neutralisation mit anorganischen oder organischen Säuren, quaternisiert werden.

Ist der Rest R in den Verbindungen der Formeln (I), vorzugsweise der Formel (II) oder den entsprechenden quaternisierten oder protonierten Verbindungen der Formel (I) oder (II) kein Wasserstoffrest, so ist R vorzugsweise ein Rest der Formel

-(CH₂-CHR²-O)_{y}-R³ (VI),

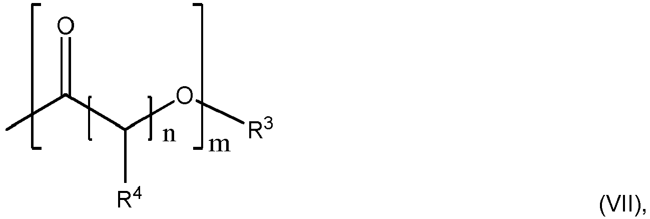

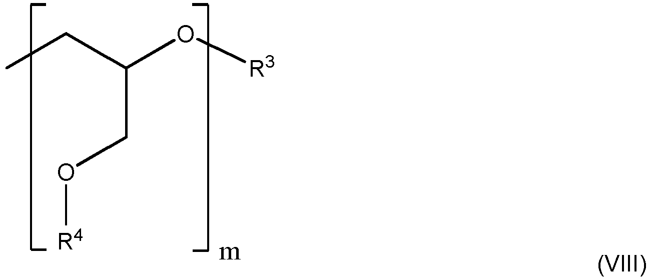

oder 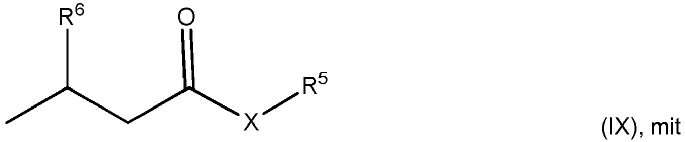
m = 1 bis 20
n = 1 bis 36
y gleich oder verschieden 1 bis 10, vorzugsweise 2 bis 5,
X = O oder NH
R² = gleich oder verschieden -H, -CH₃, -CH₂CH₃ oder Phenyl-Rest, bevorzugt Wasserstoff,
R³ gleich oder verschieden -H, oder -Alkyl, vorzugsweise C₁- bis C₄₀-Alkyl, Esterfunktionen, Urethanfunktionen oder Amidfunktionen aufweisende Reste bevorzugt H oder C₁- oder C₆- bis C₃₀-Alkyl, besonders bevorzugt Wasserstoff,
R⁴ = C₁ bis C₂₂-Alkyl-, Aryl- oder Alkylarylrest
R⁵ = H, C₁ bis C₂₂-Alkyl-, Aryl- oder Alkylarylrest, der optional auch noch OH-Funktionen enthalten kann,
R⁶ = H oder ein Rest der Formel (X): 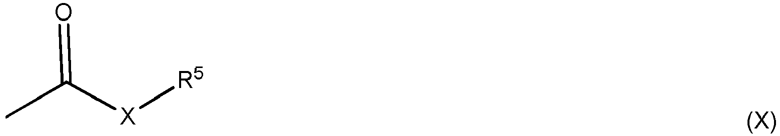 mit R⁵ und
   X wie oben definiert. Vorzugsweise ist der Rest R Wasserstoff oder ein organischer Rest, der vorzugsweise gegenüber einer Isocyanatgruppe reaktiv ist, wie z. B. ein Rest R, der eine oder mehrere entsprechende Funktionalitäten, wie beispielsweise eine OH- oder Amin-Funktion, trägt. Bevorzugt ist der Rest R ein Wasserstoffrest oder ein Rest der Formel (VI).

Besonders bevorzugt genügt die Verbindung der Formel (I) der Formel (III) 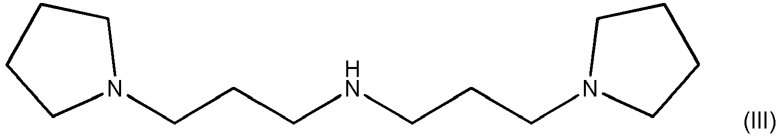 oder ist eine entsprechende quaternisierte oder protonierte Verbindung der Formel (III). Ganz besonders bevorzugt ist die Verbindung der Formel (I) eine Verbindung der Formel (III), die nicht quaternisiert oder protoniert ist.

Die Verbindungen der Formeln (I) bis (III) können einfach oder mehrfach quaternisiert sein. Vorzugsweise sind die Verbindungen der Formeln (I) bis (III) nur einfach quaternisiert. Bei einfacher Quaternisierung sind die Verbindungen der Formeln (I) bis (III) vorzugsweise an einem Stickstoffatom quaternisiert, welches Teil eines Ringes ist.

Besonders bevorzugt werden die Verbindungen der Formel (I) oder die beschriebenen bevorzugten Ausführungsformen gemäß Formel (II) oder (III) unquaternisiert verwendet.

Die Verbindungen der Verbindungen der Formel (I) oder die beschriebenen bevorzugten Ausführungsformen gemäß Formel (II) oder (III) können durch Umsetzung mit organischen oder anorganischen Säuren in die entsprechenden protonierte Verbindungen überführt werden. Diese protonierten Verbindungen können z. B. bevorzugt sein, wenn z. B. eine verlangsamte Polyurethan-Reaktion erzielt werden soll.

Als organische Säuren können z.B. Carbonsäuren mit 1 bis 36 Kohlenstoffatomen (aromatisch oder aliphatisch, linear oder verzweigt) oder auch polymere Säuren wie z.B. Polyacryl- oder Polymethacrylsäuren eingesetzt werden. Als anorganische Säuren können z.B. Phosphor-basierende Säuren, Schwefel-basierende Säuren oder Bor-basierende Säuren eingesetzt werden.

Die Verbindungen der Formel (I) bis (III) können z. B. in Anlehnung an das in WO 2012072441 beschriebene Verfahren durch eine Cyanoethylierung und Reduktion zum Amin oder wie in Katritzky et al. (J. Org. Chem. (1994), 59, 5206-5214) für die Herstellung einiger Bis[3-(1-pyrrolidinyl)propyl]amine beschrieben, hergestellt werden. Verbindungen der Formel (III) sind als Bis[3-(1-pyrrolidinyl)propyl]amin mit der CAS-Nr. [1281779-39-2] bekannt und können z. B. bei der Firma Aurora Fine Chemicals (ID-Number: A02.124.463) bezogen werden.

Besonders bevorzugt werden die Verbindungen der Formel (I) oder die beschriebenen bevorzugten Ausführungsformen gemäß Formel (II) oder (III) nicht protoniert verwendet.

Die erfindungsgemäß verwendeten Verbindungen sind bevorzugt mit dem nachfolgend beschriebenen Verfahren erhältlich, welches sich dadurch auszeichnet, dass Acrylnitril oder eine entsprechendes an den Kohlenstoffatomen mit Resten R¹ und/oder am Stickstoffatom mit Resten R substituiertes Acrylnitril an Pyrrolidin addiert wird und mit dem erhaltenen Zwischenprodukt eine reduktive Aminierung durchgeführt wird. Die Additionsreaktion erfolgt vorzugsweise als Michaeladdition.

Die Addition wird in dem Verfahren vorzugsweise in Gegenwart von Brönstedt-Säure durchgeführt. Die reduktive Aminierung kann zum Beispiel in Gegenwart von Metallkatalysatoren, wie beispielsweise Raney Cobalt, durchgeführt werden.

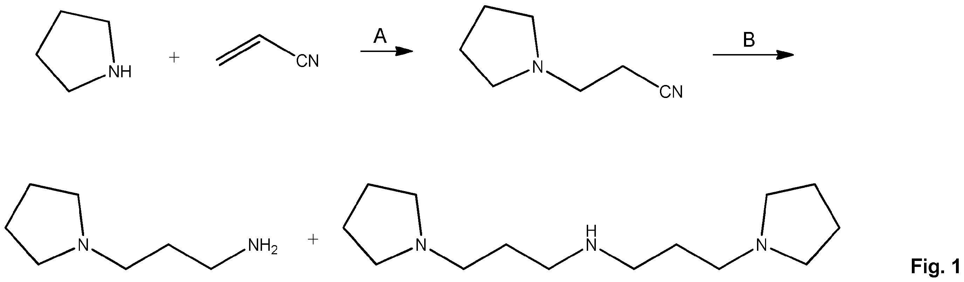

Werden in dem Verfahren Verbindungen der Formel (III) hergestellt, so wird vorzugsweise Acrylnitril an Pyrrolidin addiert und das erhaltene Zwischenprodukt durch eine reduktive Aminierung zum Bis(pyrrolidinopropyl)amin (Verbindung der Formel (III)) umgesetzt. Bei der reduktiven Aminierung kann als Neben- bzw. Beiprodukt eine Verbindung (N-Aminopropylpyrrolidin) der Formel (IV) 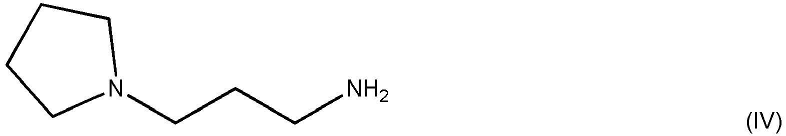 erhalten werden. In Fig. 1 ist exemplarisch das Reaktionsschema für die Herstellung der Verbindung der Formel (III) dargestellt.

Als weiteres Neben- bzw. Beiprodukt kann ein Tris(pyrrolidinopropyl)amin der Formel (V) auftreten:

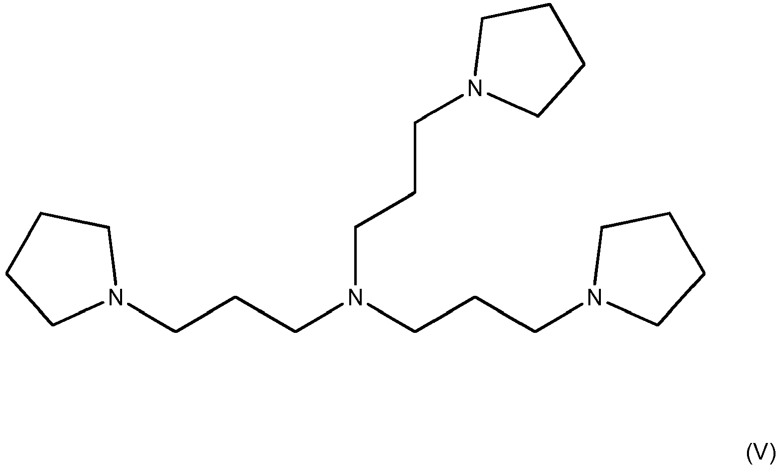

Moore et al. (J. Chem. Soc. Dalton Trans. (1987), 545-550) beschreiben die Herstellung von einigen 3-(1-pyrrolidinyl)propylamin-Derivaten auf Basis von Verbindungen der Formel (IV). Hierbei wird die Cyanoethylierung von Pyrrolidin und anschließende Reduktion mit Natrium als Syntheseweg beschrieben. US 5349063 beschreibt die Herstellung von Verbindungen der Formel (IV) durch Anlagerung von Acrylnitil an Pyrrolidin und anschließende Reduktion mit LiAlH₄.

Wenn Verbindungen der Formeln (I) oder (II) hergestellt werden sollen mit R ungleich H, so muss entweder ein am Stickstoffatom mit entsprechenden Resten R substituiertes Acrylnitril eingesetzt werden oder die entsprechende Verbindung der Formel (I) oder (II) mit R gleich H muss mit geeigneten Reagenzien umgesetzt werden. Zum Erhalt von Verbindungen der Formeln (I) oder (II) bei denen R der Formel (VII) genügt, können als Reagenzien z. B. Hydroxy-Carbonsäuren oder Lactone, wie z. B. Hydroxystearinsäure, Milchsäure, Butyrolacton oder Valerolacton eingesetzt werden.

Zum Erhalt von Verbindungen der Formeln (I) oder (II) bei denen R der Formel (VI) genügt, können als Reagenzien z. B. Ethylenoxid, Propylenoxid, Butylenoxid oder Styroloxid eingesetzt werden.

Zum Erhalt von Verbindungen der Formeln (I) oder (II) bei denen R der Formel (VIII) genügt, können als Reagenzien z. B. Glycidol oder Glycidether eingesetzt werden.

Zum Erhalt von Verbindungen der Formeln (I) oder (II) bei denen R der Formel (IX) genügt, können als Reagenzien z. B. Maleinsäure-Derivate, (Meth)acrylsäure-Derivate oder Acrylamid eingesetzt werden.

Vorzugsweise werden die oben beschriebenen Verbindungen der Formel (I) bei der erfindungsgemäßen Herstellung von Polyurethanen als Katalysator verwendet. Die Verbindungen der Formel (I) können dabei ergänzend zu üblichen Katalysatoren oder als Ersatz für übliche Katalysatoren verwendet werden. Insbesondere werden die erfindungsgemäßen Verbindungen als Ersatz für andere Aminkatalysatoren verwendet.

Bei der erfindungsgemäßen Herstellung von Polyurethanen bzw. Polyurethansystemen werden vorzugsweise zumindest eine erfindungsgemäße Verbindung der Formel (I), zumindest eine Polyolkomponente und zumindest eine Isocyanatkomponente, optional in Gegenwart von Wasser, physikalischen Treibmitteln, Flammschutzmitteln, weiteren Katalysatoren und/oder weiteren Additiven, miteinander reagiert.

Als Isocyanatkomponenten werden vorzugsweise ein oder mehrere organische Isocyanaten mit zwei oder mehr Isocyanat-Funktionen eingesetzt. Als Polyolkomponenten werden vorzugsweise ein oder mehrere Polyolen mit zwei oder mehr gegenüber Isocyanat reaktiven Gruppen, eingesetzt.

Als Isocyanatkomponenten geeignete Isocyanate im Sinne dieser Erfindung sind alle mehrfunktionalen organischen Isocyanate, wie beispielsweise 4,4'-Diphenylmethandiisocyanat (MDI), Toluoldiisocyanat (TDI), Hexamethylendiisocyanat (HMDI) und Isophorondiisocyanat (IPDI). Besonders geeignet ist das als "polymeres MDI" ("crude MDI") bekannte Gemisch aus MDI und höher kondensierten Analogen mit einer mittleren Funktionalität von 2 bis 4, sowie die verschiedenen Isomere des TDI in reiner Form oder als Isomerengemisch. Beispiele für besonders geeignete Isocyanate sind beispielsweise in EP 1 712 578, EP 1 161 474, WO 00/58383, US 2007/0072951, EP 1 678 232 und der WO 2005/085310 genannt.

Als Polyolkomponente geeignete Polyole im Sinne der vorliegenden Erfindung sind alle organischen Substanzen mit mehreren gegenüber Isocyanaten reaktiven Gruppen, vorzugsweise OH-Gruppen, sowie deren Zubereitungen. Bevorzugte Polyole sind alle zur Herstellung von Polyurethan-Schaumstoffen üblicherweise verwendeten Polyetherpolyole und Polyesterpolyole, oder Polyole natuerlicher Herkunft, sogenannte natural oil based polyols. Polyetherpolyole können durch Umsetzung von mehrwertigen Alkoholen oder Aminen mit Alkylenoxiden gewonnen werden. Polyesterpolyole basieren auf Estern mehrwertiger Carbonsäuren (die entweder aliphatisch, beispielsweise Adipinsäure, oder aromatisch, beispielsweise Phthalsäure oder Terephthalsäure, sein können) mit mehrwertigen Alkoholen (meist Glycolen).

Je nach den geforderten Eigenschaften der resultierenden Schäume können entsprechende Polyole verwendet werden, wie sie beispielsweise beschrieben werden in: US 2007/0072951 A1, WO 2007/111828, US 2007/0238800, US 6,359,022 oder WO 96/12759. Auch auf Pflanzenöl basierende Polyole können eingesetzt werden. Solche Polyole werden z. B. in WO 2006/094227, WO 2004/096882, US 2002/0103091, WO 2006/116456 und EP 1 678 232 beschrieben.

Ein bevorzugtes Verhältnis von Isocyanat und Polyol, ausgedrückt als Index der Formulierung, d.h. als stöchiometrisches Verhältnis von Isocyanat-Gruppen zu gegenüber Isocyanat reaktiven Gruppen (z.B. OH-Gruppen, NH-Gruppen) multipliziert mit 100, liegt im Bereich von 10 bis 1000, bevorzugt 80 bis 350.

Als zusätzliche Katalysatoren können Katalysatoren für die Reaktionen Isocyanat-Polyol und/oder Isocyanat-Wasser und/oder die Isocyanat-Trimerisierung eingesetzt werden.

Geeignete zusätzliche Katalysatoren im Sinne der vorliegenden Erfindung sind - neben den erfindungsgemäßen Verbindungen - Substanzen, die die Gelreaktion (Isocyanat-Polyol), die Treibreaktion (Isocyanat-Wasser) oder die Di- bzw. Trimerisierung des Isocyanats katalysieren. Typische Beispiele sind die Amine Triethylamin, Dimethylcyclohexylamin, Tetramethylethylendiamin, Tetramethylhexandiamin, Pentamethyldiethylentriamin, Pentamethyldipropylentriamin, Triethylendiamin, Dimethylpiperazin, 1,2-Dimethylimidazol, N-Ethylmorpholin, Tris(dimethylaminopropyl)hexahydro-1,3,5-triazin, Dimethylaminoethanol, Dimethylaminoethoxyethanol und Bis(dimethylaminoethyl)ether, sowie Metall-haltige Verbindungen wie beispielsweise Zinnverbindungen wie Dibutylzinndilaurat oder Zinn-II-2-ethylhexanoat und Kaliumsalze, wie Kaliumacetat und Kalium-2-ethylhexanoat. Geeignete Katalysatoren sind beispielsweise in DE 102007046860, EP 1985642, EP 1985644, EP 1977825, US 2008/0234402, EP 0656382 B1 und US 2007/0282026 und den darin zitierten Patentschriften genannt.

Die erfindungsgemäßen Verbindungen der Formeln (I) bis (III) oder die entsprechenden protonierten oder quaternisierten Verbindungen können als Reinsubstanz oder in Abmischung mit geeigneten Lösungsmitteln und Zusatzstoffen eingesetzt werden.

Als Lösungsmittel kommen alle nach dem Stand der Technik geeigneten Substanzen in Frage. Bevorzugt sind Substanzen, die in der Verschäumung problemlos verarbeitet werden können und die Eingenschaften des Schaums nicht negativ beeinflussen. So sind zum Beispiel Isocyanat-reaktive Verbindungen geeignet, da diese mit in die Polymermatrix einreagieren und keine Emissionen im Schaum generieren. Beispiele sind OH-funktionelle Verbindungen wie (Poly-)Alkylenglykole: Ethylenglykol, Diethylenglykol, Propylenglykol, Dipropylenglykol, sowie höhere Homologe davon.

Als Zusatzstoffe können alle nach dem Stand der Technik bekannten Substanzen verwendet werden, die bei der Herstellung von PU-Schaum Verwendung finden, wie zum Beispiel Antioxidantien, Flammschutzmittel, Biozide, Farbstoffe, Pigmente, Antistatik-Additive, weitere katalytisch aktive Substanzen oder Tenside.

Geeignete Einsatzmengen an zusätzlichen Katalysatoren richten sich nach dem Typ des Katalysators und liegen vorzugsweise im Bereich von 0,05 bis 5 pphp (= Gewichtsteile bezogen auf 100 Gewichtsteile Polyol) bzw. 0,1 bis 10 pphp für Kaliumsalze.

Sollen Polyurethanschäume als Polyurethane bzw. Polyurethansysteme hergestellt werden kann es vorteilhaft sein, Wasser als Treibmittel einzusetzen. Vorzugsweise wird soviel Wasser eingesetzt, dass die Wassermenge von 0,1 bis 25 pphp beträgt.

Es können auch geeignete physikalische Treibmittel eingesetzt werden. Dies sind beispielsweise verflüssigtes CO₂, und leichtflüchtige Flüssigkeiten, beispielsweise Kohlenwasserstoffe mit 3, 4 oder 5 Kohlenstoff-Atomen, bevorzugt cyclo-, iso- und n-Pentan, Fluorkohlenwasserstoffe, bevorzugt HFC 245fa, HFC 134a und HFC 365mfc, Fluorchlorkohlenwasserstoffe, bevorzugt HCFC 141b, Hydrofluoroolefine (HFO) oder Hydrohaloolefine wie z.B. 1234ze, 1233zd(E) oder 1336mzz, Sauerstoff-haltige Verbindungen wie Methylformiat, Aceton und Dimethoxymethan, oder Chlorkohlenwasserstoffe, bevorzugt Dichlormethan und 1,2-Dichlorethan.

Neben Wasser und den physikalischen Treibmitteln, können auch andere chemische Treibmittel eingesetzt werden, die mit Isocyanaten unter Gasentwicklung reagieren, wie beispielsweise Ameisensäure.

Geeignete Flammschutzmittel im Sinne dieser Erfindung sind alle Substanzen, die nach dem Stand der Technik als dafür geeignet betrachten werden. Bevorzugte Flammschutzmittel sind flüssige organische Phosphor-Verbindungen, wie halogenfreie organische Phosphate, z.B. Triethylphosphat (TEP), halogenierte Phosphate, z.B. Tris(1-chlor-2-propyl)phosphat (TCPP) und Tris(2-chlorethyl)phosphat (TCEP) und organische Phosphonate, z.B. Dimethylmethanphosphonat (DMMP), Dimethylpropanphosphonat (DMPP), oder Feststoffe wie Ammoniumpolyphosphat (APP) und roter Phosphor. Des Weiteren sind als Flammschutzmittel halogenierte Verbindungen, beispielsweise halogenierte Polyole, sowie Feststoffe wie Blähgraphit und Melamin geeignet.

Zur Beeinflussung der Schaumeigenschaften von Polyurethanschäumen können bei deren Herstellung Additive beigegeben werden solche Additive können insbesondere Siloxane bzw. organomodifizierte Siloxane sein, wobei die im Stand der Technik genannten Substanzen verwendet werden können. Vorzugsweise werden solche Verbindungen eingesetzt, die für den jeweiligen Schaumtypen (Hartschäume, Heissweichschäume, viskoelastische Schäume, Esterschäume, HR-Schäume, halbharte Schäume) besonders geeignet sind. Geeignete (organomodifizierte) Siloxane sind beispielsweise in den folgenden Schriften beschrieben: EP 0839852, EP 1544235, DE 10 2004 001 408, EP 0839852, WO 2005/118668, US 20070072951, DE 2533074, EP 1537159 EP 533202, US 3933695, EP 0780414, DE 4239054, DE 4229402, EP 867465. Die Herstellung dieser Verbindungen kann wie im Stand der Technik beschrieben erfolgen. Geeignete Beispiele sind z. B. in US 4,147,847, EP 0493836 und US 4,855,379 beschrieben.

Als (Schaum-)stabilisatoren können alle aus dem Stand der Technik bekannten Stabilisatoren eingesetzt werden. Bevorzugt werden Schaumstabilisatoren auf der Basis von Polydialkylsiloxan-Polyoxyalkylen-copolymeren, wie sie allgemein bei Herstellung von Urethanschaumstoffen verwendet werden, eingesetzt. Diese Verbindungen sind vorzugsweise so aufgebaut, dass z. B. ein langkettiges Copolymerisat aus Ethylen- und Propylenoxid mit einem Polydimethylsiloxanrest verbunden ist. Die Verknüpfung zwischen dem Polydialkylsiloxan und dem Polyetherteil kann dabei über eine SiC-Verknüpfung oder eine Si-O-C-Bindung erfolgen. Strukturell kann der oder können die unterschiedlichen Polyether terminal oder seitenständig an das Polydialkylsiloxan gebunden sein. Der Alkylrest oder die verschiedenen Alkylreste können dabei aliphatisch, cycloaliphatisch oder aromatisch sein. Ganz besonders vorteilhaft sind dabei Methylgruppen. Das Polydialkylsiloxan kann dabei linear sein oder auch Verzweigungen enthalten. Geeignete Stabilisatoren, insbesondere Schaumstabilisatoren sind unter anderem in US 2834748, US2917480 sowie in US3629308 beschrieben. Geeignete Stabilisatoren können von der Evonik Industries AG unter dem Handelsnamen TEGOSTAB^{®} bezogen werden.

Die erfindungsgemäßen Verbindungen werden bevorzugt bei der Herstellung von Polyurethansystemen, insbesondere Polyurethanschäumen verwendet.

Es kann vorteilhaft sein, wenn bei der Herstellung des Polyurethans bzw. des Polyurethansystems eine Zusammensetzung hergestellt und/oder eingesetzt wird, die zumindest eine erfindungsgemäße Verbindung, zumindest eine Polyolkomponente, ggf. zumindest eine Isocyanatkomponente sowie optional ein oder mehrere Treibmittel aufweist, und diese Zusammensetzung reagiert wird. Besonders bevorzugt werden solche Zusammensetzungen eingesetzt, die die oben bei der Verwendung beschriebenen Stoffe bzw. Komponenten zur Herstellung von Polyurethanen bzw. Polyurethansystemen aufweisen.

Die erfindungsgemäßen Zusammensetzung enthaltend mindestens eine Polyolkomponente, zeichnen sich dadurch aus, dass sie zumindest eine Verbindung der Formel (I), (II) oder (III), wie oben beschrieben, oder eine entsprechende quaternisierte oder protonierte Verbindung aufweisen. Vorzugsweise weist die erfindungsgemäße Zusammensetzung außerdem mindestens eine Isocyanatkomponente auf. Bevorzugt weist die Zusammensetzung von 0,01 bis 5 Gew.-%, bevorzugt von 0,1 bis 1 Gew.-% an Verbindungen der Formeln (IV) und/oder (V) bezogen auf die Summe an Verbindungen der Formeln (I) bis (V) auf.

Das molare Verhältnis von Verbindungen der Formel (I), (II) oder (III) oder der entsprechenden quaternisierten Verbindungen zu gegenüber Isocyanaten reaktiven Gruppen der Polyolkomponente beträgt vorzugsweise von 4 x 10⁻⁴ zu 1 bis 0,2 zu 1.

Die erfindungsgemäße Zusammensetzung kann zusätzlich ein oder mehrere Treibmittel, wie sie oben beschrieben sind, aufweisen. Neben oder an Stelle von Treibmitteln kann die erfindungsgemäße Zusammensetzung weitere Zusatzstoffe/Hilfsmittel oder Additive aufweisen, die bei der Herstellung von Polyurethansystemen, bevorzugt Polyurethanschäumen eingesetzt werden. Eine Auswahl geeigneter Hilfsmittel/Zusatzstoffe/Additive, wie z. B. Schaumstabilisatoren oder Flammschutzmittel, wurde bereits oben bei der Herstellung der Polyurethane beschrieben.

Die Verarbeitung der erfindungsgemäßen Zusammensetzungen zu Polyurethansystemen, insbesondere PU-Schaumstoffen kann nach allen dem Fachmann geläufigen Verfahren erfolgen, beispielsweise im Handmischverfahren oder bevorzugt mit Hilfe von Verschäumungsmaschinen, insbesondere Niederdruck- oder Hochdruck-Verschäumungsmaschinen. Dabei können diskontinuierliche Verfahren, beispielsweise zur Produktion von Formschäumen, Kühlschränken und Paneelen, oder kontinuierliche Verfahren, beispielsweise bei Dämmplatten, Metallverbundelementen, Blöcken oder bei Sprühverfahren zum Einsatz kommen.

Es können alle dem Fachmann bekannten Verfahren zur Herstellung von PU-Schäumen, insbesondere Polyurethanweichschaumstoffen, verwendet werden. So kann zum Beispiel der Schäumungsprozess sowohl in horizontaler als auch in vertikaler Richtung in diskontinuierlichen oder kontinuierlichen Anlagen erfolgen. Ebenso können die erfindungsgemäß eingesetzten Zusammensetzungen für die CO₂-Technologie benutzt werden. Die Verwendung in Niederdruck- und Hochdruckmaschinen ist möglich, wobei die Zusammensetzungen sowohl direkt in die Mischkammer dosiert werden können oder auch schon vor der Mischkammer einer der danach in die Mischkammer gelangenden Komponenten zugemischt werden. Die Zumischung kann auch im Rohstofftank erfolgen.

Mittels der erfindungsgemäßen Verwendung von Verbindungen der Formel (I) sind die nachfolgend beschriebenen erfindungsgemäßen Polyurethansysteme erhältlich.

Diese erfindungsgemäßen Polyurethansysteme sind vorzugsweise Polyurethanschäume, bevorzugt Polyurethanhartschäume, Polyurethanweichschäume, viskoelastische Schäume, hochelastische Schäume sogenannte "High Resilience Schäume", halbharte Polyurethanschäume, thermoverformbare Polyurethanschäume oder Integralschäume. Die Bezeichnung Polyurethan ist hierbei wiederum als Oberbegriff für ein aus Di- bzw. Polyisocyanaten und Polyolen oder anderen gegenüber Isocyanat reaktive Spezies, wie z.B. Aminen, hergestelltes Polymer zu verstehen, wobei die Urethan-Bindung nicht ausschließlicher oder überwiegender Bindungstyp sein muss. Auch Polyisocyanurate und Polyharnstoffe sind ausdrücklich mit eingeschlossen.

Die erfindungsgemäßen Polyurethanschäume zeichnen sich vorzugsweise dadurch aus, dass sie einen Massenanteil an Verbindungen der Formel (I) bzw. der durch Umsetzung erhaltenen Reste am fertigen Polyurethanschaum von 0,005 bis 10 Gew.-%, bevorzugt von 0,05 bis 3 Gew.-%, besonders bevorzugt 0,1 bis 1 Gew.-% aufweisen.

In einer bevorzugten Ausführungsform handelt es sich bei den erfindungsgemäßen bzw. erfindungsgemäß hergestellten PU-Schäumen um offenzellige PU-Weichschäume. Offenzellig heißt im Rahmen der vorliegenden Erfindung, dass ein Schaum eine gute Luftdurchlässigkeit aufweist. Die Luftdurchlässigkeit des Schaums kann durch eine Staudruckmessung am Schaumstoff ermittelt werden. Die Staudruckmessung kann in Anlehnung an EN 29053 erfolgen. Wird der gemessene Staudruck in mm Ethanol angegeben, so weisen offenzellige PU-Schäume, insbesondere PU-Weichschäume einen Staudruck von kleiner 100 mm, bevorzugt 50 mm Ethanolsäule, bestimmt gemäß der in den Beispielen beschriebenen Messmethode auf.

Eine bevorzugte Zusammensetzung zur Herstellung von Polyurethan- bzw. Polyisocyanurat-Schaum im Sinne der vorliegenden Erfindung würde ein Raumgewicht von 20 bis 90 kg/m³ ergeben und hätte die folgende Zusammensetzung:

| Komponente | Gewichtsanteil |
|---|---|
| Polyol | 100 |
| (Amin-)Katalysator | 0,05 bis 5 |
| Kalium-Trimerisierungskatalysator | 0 bis 10 |
| Siloxan | 0,1 bis 15, vorzugsweise 0,2 bis 7 |
| Wasser | 0 bis <25, vorzugsweise 0,1 bis 15 |
| Treibmittel 0 bis | 0 bis 130 |
| Flammschutzmittel | 0 bis 70 |
| Füllstoffe | 0 bis 150 |
| weitere Additive | 0 bis 20 |
| Isocyanat-Index: | größer 15 |

Die vorliegende Erfindung wird an Hand der Figur 1 näher erläutert, ohne dass die Erfindung auf die dort angegeben Ausführungsformen beschränkt sein soll.

Das erfindungsgemäße Verfahren wird an Hand des in Abbildung Fig. 1 dargestellten Reaktionsschemas zur Herstellung von Verbindungen der Formel (III) und ggf. (IV) näher erläutert, ohne auf das dargestellte Reaktionsschema beschränkt zu sein. Dabei sind der Reaktionsschritt der Addition mit A und der Reaktionsschritt der reduktiven Aminierung mit B gekennzeichnet.

In den nachfolgend aufgeführten Beispielen wird die vorliegende Erfindung beispielhaft beschrieben, ohne dass die Erfindung, deren Anwendungsbreite sich aus der gesamten Beschreibung und den Ansprüchen ergibt, auf die in den Beispielen genannten Ausführungsformen beschränkt sein soll.

### Beispiele

### Beispiel 1: Herstellung von Hartschäumen

Die Durchführung der Verschäumungen erfolgte im Handmischverfahren. Es wurden Formulierungen, wie in Tabelle 1 angegeben, verwendet. Dazu wurden Polyol, konventioneller bzw. erfindungsgemäßer Katalysator, Wasser, Schaumstabilisator und Treibmittel in einen Becher eingewogen und mit einem Tellerrührer (6 cm Durchmesser) 30 s bei 1000 Upm vermischt. Durch erneutes Abwiegen wurde die beim Mischvorgang verdunstete Treibmittelmenge bestimmt und wieder ergänzt. Jetzt wurde das Isocyanat (MDI) zugegeben, die Reaktionsmischung wurde mit dem beschriebenen Rührer 5 s bei 3000 Upm verrührt und sofort in eine mit Papier ausgekleidete Kiste überführt. Zur Beurteilung der katalytischen Eigenschaften wurden die folgenden charakteristischen Parameter bestimmt: Creme-Zeit, Gel-Zeit, Steigzeit und Klebfrei-Zeit.

**Tabelle 1: Formulierung zur Herstellung von Hartschaum**

| Komponente | Gewichtsanteil |
|---|---|
| Daltolac R 471* | 100 Teile |
| Wasser | 2,6 Teile |
| cyclo-Pentan | 13,1 Teile |
| TEGOSTAB ^{®} B 8460 | 1,5 Teile |
| Katalysator | 1,5 Teile |
| Desmodur 44V20L** | 198,5 Teile |

| | |
|---|---|
| * Polyetherpolyol der Firma Huntsman ** polymeres MDI der Firma Bayer; 200 mPa*s; 31,5% NCO; Funktionalität 2,7. | |

Die Ergebnisse der Beurteilung der katalytischen Eigenschaften der beiden verglichenen Katalysatoren Tegoamin DMCHA (Stand der Technik) und der erfindungsgemäße verwendeten Verbindung der Formel (III) sind in Tabelle 2 angegeben.

**Tabelle 2: Ergebnisse Reaktionszeiten in Sekunden - Vergleich der erfindungsgemäßen Aminstrukturen mit N,N-Dimethylcyclohexylamin (DMCHA)**

| | Cremezeit | Gelzeit | Steigzeit | Klebfreizeit |
|---|---|---|---|---|
| TEGOAMIN^{®} DMCHA | 37 | 137 | 197 | 272 |
| FORMEL III | 47 | 222 | 307 | 417 |

Wie der Tabelle 2 entnommen werden kann, zeigt das Amin der Formel (III) eine ausreichend gute Aktivität im Hartschaum und eine ausgewogene Charakteristik der Gel- und Treibreaktion. Der unter Verwendung der Verbindung der Formel (III) katalysierte Schaum zeigt keine Nachteile hinsichtlich der physikalischen Eigenschaften gegenüber dem mit TEGOAMIN^{®} DMCHA katalysierten Schaum.

### Anwendungstechnische Tests

### Physikalische Eigenschaften der Polyurethanweichschäume

Die hergestellten Polyurethanweichschäume wurden anhand folgender physikalischer Eigenschaften beurteilt:
a) Rücksacken des Schaumstoffes nach dem Ende der Steigphase (=Rückfall). Der Rückfall, bzw. das Nachsteigen ergibt sich aus der Differenz der Schaumhöhe nach direktem Abblasen und nach 3 min. nach Abblasen des Schaums. Die Schaumhöhe wird dabei durch eine an einem Zentimetermaß befestigte Nadel auf dem Maximum in der Mitte der Schaumkuppe gemessen. Ein negativer Wert beschreibt hierbei das Rücksacken des Schaumes nach dem Abblasen, ein positiver Wert beschreibt entsprechend das Nachsteigen des Schaumes.
b) Raumgewicht (RG); die Bestimmung erfolgt, wie in ASTM D 3574 - 08 unter Test A beschrieben, durch Messung der Core Density.
c) Die Luftdurchlässigkeit des Schaums wurde durch eine Staudruckmessung am Schaumstoff ermittelt. Der gemessene Staudruck wird in mm Ethanolsäule angegeben, wobei niedrigere Staudruckwerte einen offeneren Schaum charakterisieren. Die Werte wurden im Bereich von 0 bis 300 mm gemessen.

Die Messung des Staudrucks erfolgte mittel einer Apparatur umfassend eine Stickstoffquelle, Reduzierventil mit Manometer, Durchflussregelschraube, Waschflasche, Durchflussmessgerät, T-Stück, Auflagedüse und einem skaliertem Glasrohr, in welches Ethanol gefüllt ist. Die Auflagedüse weist eine Kantenlänge von 100 x 100 mm, ein Gewicht von 800 g, eine lichte Weite der Austrittsöffnung von 5 mm, eine lichte Weite des unteren Auflageringes von 20 mm und einen Außendurchmesser des unteren Auflageringes von 30 mm auf.

Die Messung erfolgt durch Einstellung des Stickstoffvordrucks per Reduzierventil auf 1 bar und Einregeln der Durchflussmenge auf 480 l/h. Die Ethanolmenge wird im skalierten Glasrohr so eingestellt, dass keine Druckdifferenz aufgebaut und ablesbar ist. Für die Vermessung des Prüfkörpers mit einer Dimension von 250 x 250 x 50 mm wird die Auflagedüse an den Ecken des Prüfkörpers kantenkongruent aufgelegt sowie einmal an der (geschätzten) Mitte des Prüfkörpers (jeweils auf der Seite mit der größten Oberfläche) aufgelegt. Abgelesen wird, wenn sich ein konstanter Staudruck eingestellt hat.

Die Auswertung erfolgt durch Mittelwertbildung über die fünf erhaltenen Messwerte.
d) Stauchhärte CLD, 40% nach DIN EN ISO 3386-1.

### Messung der Emissionen (des VOC-Gehaltes) nach der Daimler-Chrysler-Prüfvorschrift

Die Emission wurde in Anlehnung an die Daimler-Chrysler-Prüfvorschrift PB VWT 709 bestimmt. Im Folgenden wird die Durchführung der Thermodesorption mit anschließender Gaschromatographie/Massenspektrometrie-Kopplung (GC/MS) beschrieben.
a) Messtechnik: Die Thermodesorption wurde mit einem Thermodesorber "TDS2" mit Probenwechsler der Fa. Gerstel, Mülheim, in Verbindung mit einem Hewlett Packard HP6890/HP5973 GC/MSD-System durchgeführt.
b) Die Messbedingungen sind in Tabellen 3 und 4 angegeben.

**Tabelle 3: Messparameter Thermodesorption**

| | |
|---|---|
| Thermodesorption | Gerstel TDS2 |
| Desorptionstemperatur | 90°C |
| Desorptionsdauer | 30 min |
| Fluss | 60 ml/min |
| Transferline | 280°C |
| Kryofokussierung | HP 6890 PTV |
| Liner | Glasverdampferrohr mit silanisierter Glaswolle |
| Temperatur | -150°C |

**Tabelle 4: Messparameter Gaschromatographie/Massenspektrometrie**

| | |
|---|---|
| GC | Kapillar-GC HP 6890 |
| Injektor | PTV Split 1:50 |
| Temperaturprogramm | -150°C; 3 min; 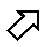 12°C/s; 280°C 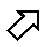 |
| Säule | Agilent 19091 B-115, Ultra 2, 50 m * 0,32 mm dF 0,5µm |
| Fluss | 1 ml/min const. Flow |
| Temperaturprogramm | 50°C; 5 min; 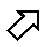 3°C/min; 92°C; 5°C/min; 160°C; 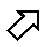 10°C/min; 280°C, 20 min |
| Detektor | HP MSD 5973 |
| Modus | Scan 29-350 amu 2,3 scans/sec |
| Auswertung | Auswertung des Totalionenstrom-Chromatrogramms durch Berechnung als Toluoläquivalent |

c) Kalibrierung
Zur Kalibrierung wurde 1µl eines Gemisches aus Toluol und Hexadekan in Pentan (je 0,6mg/ml) auf ein gereinigtes, mit Tenax^{®}TA (mesh 35/60) gefülltes Adsorptionsröhrchen gegeben und vermessen (Desorption 5 min; 280 °C).
d) Probenvorbereitung
10 mg Schaumstoff wurden in drei Teilproben in einem Thermodesorptionsröhrchen platziert. Dabei wurde darauf geachtet, dass der Schaum nicht komprimiert wird.

### Bestimmung der Raumtemperatur-Emission nach dem so genannten Prüfkammertest:

Von den erhaltenen Schäumen wurde die Emission bei Raumtemperatur in Anlehnung an die DIN-Vorschrift DIN 13419-1 bestimmt. Die Probenentnahme erfolgte nach 24 Stunden. Hierzu wurden 2 Liter der Prüfkammeratmosphäre mit einer Flussrate von 100 ml /min über ein mit Tenax^{®}TA (mesh35/60) gefülltes Adsorptionsröhrchen gegeben. Im Folgenden wird die Durchführung der Thermodesorption mit anschließender Gaschromatographie/Massenspektrometrie-Kopplung (GC/MS) beschrieben.

Bei Tenax^{®}TA handelt es sich um ein poröses Polymerharz basierend auf 2.6-Diphenylenoxid, erhältlich beispielsweise bei der Firma Scientific Instrument Services, 1027 Old York Rd., Ringoes, NJ 08551.

### Messtechnik

Die Thermodesorption wurde mit einem Thermodesorber "TDS2" mit Probenwechsler der Fa. Gerstel, Mülheim, in Verbindung mit einem Hewlett Packard HP6890/HP5973 GC/MSD-System durchgeführt.

Die Messbedingungen sind in Tabelle 5 und 6 angegeben.

**Tabelle 5: Messparameter Thermodesorption**

| | |
|---|---|
| Thermodesorption | Gerstel TDS2 |
| Desorptionstemperatur | 280°C |
| Desorptionsdauer | 5 min |
| Fluss | 60 ml/min |
| Transferline | 280°C |
| Kryofokussierung | HP 6890 PTV |
| Liner | Glasverdampferrohr mit silanisierter Glaswolle |
| Temperatur | -150°C |

**Tabelle 6: Messparameter Gaschromatographie/Massenspektrometrie**

| | |
|---|---|
| GC | Kapillar-GC HP 6890 |
| Temperaturprogramm | -150°C; 3 min; 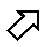 12°C/s; 280°C |
| Säule | Agilent 19091 B-115, Ultra 2, 50 m * 0,32 mm dF 0,5µm 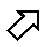 |
| Fluss | 1 ml/min const. Flow |
| Temperaturprogramm | 50°C; 5 min; 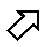 3°C/min; 92°C; 5°C/min; 160°C; 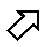 10°C/min; 280°C, 20 min |
| Detektor | HP MSD 5973 |
| Auswertung | Auswertung des Totalionenstrom-Chromatrogramms durch Berechnung als Toluoläquivalent |

Zur Kalibrierung wurde 1µl eines Gemisches aus Toluol und Hexadekan in Pentan (je 0,6mg/ml) auf ein gereinigtes, mit Tenax®TA (mesh35/60) gefülltes Adsorptionsröhrchen gegeben und vermessen (Desorption 5 min; 280°C).

### Beispiel 2: Herstellung von Polyurethanweichschäumen

Bei der Verschäumung wurden 300 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.

Zur Verschäumung wurden das Polyol, Wasser, Amin, Zinnsalz und Silikonstabilisator unter Rühren gut vermischt. Nach Zugabe des Isocyanats wurde mit einem Rührer 7 Sek. bei 3000 U/Min. gerührt und das Gemisch in einem mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

In einer Rezeptur basierend auf 3,0 Teilen Wasser wurde das Verhalten von verschiedenen Aminen miteinander verglichen. Zum einen wurden Steigzeitprofile der Schäume aufgenommen, um die katalytische Aktivität vergleichen zu können. Zum anderen wurden die Emissionswerte der Schäume verglichen. Die folgenden Amine wurden miteinander verglichen: Triethylendiamin, 33% Gew.-ige Lösung in Dipropylenglykol (TEGOAMIN^{®} 33, erhältlich bei der Firma Evonik Industries), Bis(2-Dimethylaminoethylether) 70 Gew.-%ige Lösung in Dipropylenglykol (TEGOAMIN^{®} BDE, erhältlich bei der Firma Evonik Industries), N-(3-Dimethylaminopropyl)-N,N-Diisopropylamin (TEGOAMIN^{®} ZE-1, erhältlich bei der Firma Evonik Industries) und die Verbindung der Formel (III). Die Rezeptur ist in Tabelle 7 angegeben.

**Tabelle 7: In Beispiel 2 verwendete Rezeptur**

| Rezeptur | |
|---|---|
| 100 | Teile Polyol^{*1} |
| 3,0 | Teile Wasser |
| 0,6 | Teile Schaumstabilisator^{*2} TEGOSTAB^{®}B 8110 |
| 0,15 | Teile Katalysator^{*3} |
| 0,15 | Teile Amin |
| 40,1 | Teile Isocyanat (Toluoldiisocyanat T80: 80% 2,4-Isomer, 20% 2,6-Isomer) |

| | |
|---|---|
| ^{*1} = Polyethertriol mit der OH-Zahl 48. ^{*2} = TEGOSTAB^{®} Produkte, erhältlich bei der Firma Evonik Industries, hierbei handelt es sich um Polysiloxan-Polyoxyalkylen-Blockcopolymere zur Verwendung als Schaumstabilisator bei der Herstellung von flexiblen Polyurethanblock- und -formschäumen. ^{*3} = KOSMOS^{®}29, erhältlich bei der Firma Evonik Industries, hierbei handelt es sich um das Zinn-II-Salz der 2-Ethylhexansäure. | |

Die Verschäumungsergebnisse sind in Tabelle 8 wiedergegeben.

**Tabelle 8: Verschäumungsergebnisse aus Beispiel 2**

| Amin (0,15 Teile) | Steigzeit (in s) | Raumgewicht (in kg/m³) | Offenzellig keit* | Stauchhärte CLD40 Kompression (in kPa) | Rueckfall (in cm) |
|---|---|---|---|---|---|
| TEGOAMIN® 33 | 150 | 31,2 | 23 | 4,0 | 0,4 |
| TEGOAMIN® BDE | 121 | 30,4 | 11 | 3,4 | 0,3 |
| TEGOAMIN® ZE-1 | 168 | 31,2 | 29 | 3,2 | 0,0 |
| Verbindung der Formel (III) | 152 | 31,7 | 34 | 4,1 | 0,3 |

| | | | | | |
|---|---|---|---|---|---|
| * = (Staudruck in mm Ethanolsäule) | | | | | |

Es ist eindeutig festzustellen, dass die Steigzeit der Verbindung der Formel (III) derjenigen des TEGOAMIN® 33 entspricht. Es handelt sich somit um ein Amin, das sich in seiner Reaktivität zwischen einem puren Treibkatalysator wie TEGOAMIN® BDE und einem stärkeren, reaktiven Gelkatalysator wie TEGOAMIN® ZE-1 bewegt.

### Beispiel 3: Verschäumungsergebnisse - Emission

Um den Einfluss der Amine auf die Schaumemission zu untersuchen, wurde eine Rezeptur ausgewählt, die ein emissionsarmes Polyol enthält. Es wurde dabei sowohl auf die Gesamtemission, als auch auf Aminemission geachtet. Die verwendete Rezeptur ist in Tabelle 9 angegeben.

**Tabelle 9: In Beispiel 3 verwendete Rezeptur**

| Rezeptur | |
|---|---|
| 100 | Teile Polyol^{*4} |
| 3,0 | Teile Wasser |
| 0,8 | Teile Schaumstabilisator^{*2} (TEGOSTAB^{®}B 8228^{*2}) |
| 0,2 | Katalysator^{*3} (KOSMOS^{®}29^{*3}) |
| 0,25 | Amin |
| 39,6 | Teile Isocyanat (Toluylendiisocyanat T80) (80% 2,4-Isomer, 20% 2,6-Isomer) |

| | |
|---|---|
| ^{*2} =TEGOSTAB^{®} Produkte, erhältlich bei der Firma Evonik Industries, hierbei handelt es sich um Polysiloxan-Polyoxyalkylen-Blockcopolymere zur Verwendung als Schaumstabilisator bei der Herstellung von flexiblen Polyurethanblock- und -formschäumen. ^{*3} = KOSMOS^{®}29, erhältlich bei der Firma Evonik Industries, hierbei handelt es sich um das Zinn-II-Salz der 2-Ethylhexansäure. ^{*4} = emissionsarmes Polyethertriol der OH-Zahl 56 | |

Das Emissionsverhalten der zuvor beschriebenen Schäume wurde entsprechend der Daimler-Chrysler-Prüfanweisung BP VWT 709 VOC-Bestimmung (30 Min. bei 90°C) untersucht. Die Ergebnisse sind in Tabelle 10 wiedergegeben.

**Tabelle 10: Ergebnisse zu Beispiel 3**

| Aminkatalysator | VOC-Gehalt | | |
|---|---|---|---|
| | VOC (gesamt) | VOC (Amin) | Prüfkammer |
| TEGOAMIN^{®} 33 | 800 µg/g | 224 µg/g | 110 µg/m³ |
| TEGOAMIN^{®} BDE | 980 µg/g | 466 µg/g | 325 µg/m³ |
| TEGOAMIN^{®} ZE-1 | 420 µg/g | nicht detektierbar | 20 µg/m³ |
| Verbindung der Formel (III) | 240 µg/g | nicht detektierbar | < 20 µg/m³ |

Tabelle 10 ist eindeutig zu entnehmen, dass die Gesamt-Emissionen bei Verwendung der Verbindung der Formel (III) nicht nur im Vergleich zu unreaktiven Aminen wie TEGOAMIN^{®} BDE oder TEGOAMIN^{®} 33, jedoch auch zu bereits VOC-optimierten Aminen wie TEGOAMIN^{®} ZE-1 drastisch reduziert werden können. Außerdem können durch Verwendung von Verbindungen der Formel (III) die Steigzeiten gegenüber ZE-1 verkürzt werden.

### Beispiel 4 : HR-Schaum (Block/Molded)

Hier wurden die gleichen Verschäumungsmethoden wie beim klassischen Polyurethanweichschaum in Beispiel 2 angewendet.

Es wurden 500 g Polyol eingesetzt; die anderen Formulierungsbestandteile wurden entsprechend umgerechnet. Dabei bedeutete beispielsweise 1,0 Teil einer Komponente 1 g dieser Substanz je 100 g Polyol.

Zur Verschäumung wurden das Polyol, Wasser, Amin, und Silikonstabilisator unter Rühren gut vermischt. Nach Zugabe des Isocyanats wurde mit einem Rührer 4 Sek. bei 3000 U/Min. gerührt und das Gemisch in einem mit Papier ausgekleideten Holzkasten (Grundfläche 27 cm x 27 cm) gegossen. Es entstand ein Schaumstoff, der den nachfolgend beschriebenen anwendungstechnischen Tests unterzogen wurde.

In einer Rezeptur, wie in Tabelle 11 angegeben, wurde das Verhalten von verschiedenen Aminen miteinander verglichen. Zum einen wurden Steigzeiten der Schäume bestimmt, um die katalytische Aktivität vergleichen zu können. Zum anderen wurden die Emissionswerte der Schäume verglichen. Die folgenden Amine wurden miteinander verglichen: Triethylendiamin, 33% Gew.-ige Lösung in Dipropylenglykol (TEGOAMIN^{®} 33, erhältlich bei der Firma Evonik Industries), Jeffcat^{®} Z-130 (1,3-propanediamine, N -(3-(dimethylamino)propyl)-N,N-dimethyl,) erhältlich bei Huntsman) und die Verbindung der Formel (III).

**Tabelle 11: In Beispiel 4 verwendete Rezeptur**

| Rezeptur | |
|---|---|
| 70 | Teile Polyol 1 |
| 30 | Teile Polyol 2 |
| 3,7 | Teile Wasser |
| 1,0 | Teile Schaumstabilisator^{*2} TEGOSTAB^{®}B 8727 LF 2 |
| 0,5 | Teile Glycerin |
| 1,0 | Teile Diethanolamin |
| 0,33 | Teile Amin |
| 44 | Teile Isocyanat (Toluoldiisocyanat T80: 80% 2,4-Isomer, 20% 2,6-Isomer) |

| | |
|---|---|
| Polyol 1 = Polyethertriol mit der OH-Zahl 32 Polyol 2 = Polyethertriol mit der OH-Zahl 20, enthaltend 43% Feststoff (SAN). ^{*2} = TEGOSTAB^{®} Produkte, erhältlich bei der Firma Evonik Industries | |

Die Verschäumungsergebnisse sind in Tabelle 12 wiedergegeben.

**Tabelle 12: Verschäumungsergebnisse aus Beispiel 4**

| Amin (0,33 Teile) | Steigzeit (in s) | Gel-Zeit (in s) | Zellenzahl (in cm⁻¹) | Schaumhöhe (in cm) | Rueckfall (in cm) |
|---|---|---|---|---|---|
| TEGOAMIN® 33 | 127 | 79 | 10 | 32,5 | 0,7 |
| Jeffcat Z-130 | 169 | 100 | 10 | 31,7 | 0,9 |
| | | | | | |
| Verbindung der Formel (III) | 160 | 95 | 10 | 32,2 | 0,2 |

Von den Schäumen wurden ebenfalls die Emissionen bestimmt entsprechend der Daimler-Chrysler-Prüfanweisung BP VWT 709. Die Ergebnisse sind in Tabelle 13 zusammengestellt.

**Tabelle 13: Ergebnisse zu Beispiel 4**

| Aminkatalysator | VOC-Gehalt | |
|---|---|---|
| | VOC (gesamt) | VOC (Amin) |
| TEGOAMIN^{®} 33 | 810 µg/g | 210 µg/g |
| Jeffcat^{®} Z-130 | 320 µg/g | nicht detektierbar |
| | | |
| Verbindung der Formel (III) | 210 µg/g | nicht detektierbar |

Tabelle 13 ist eindeutig zu entnehmen, dass die Gesamt-Emissionen bei Verwendung der Verbindung der Formel (III) nicht nur im Vergleich zu unreaktiven Aminen wie TEGOAMIN^{®} 33, sondern auch zu bereits VOC-optimierten Aminen wie Jeffcat^{®} Z-130 reduziert werden können. Außerdem können durch Verwendung von Verbindungen der Formel (III) die Steigzeiten gegenüber Jeffcat^{®} Z-130 verkürzt werden.

## Patentansprüche

1. Verwendung einer stickstoffhaltigen Verbindung bei der Herstellung von Polyurethanen, **dadurch gekennzeichnet, dass** sie der Formel (I) genügt 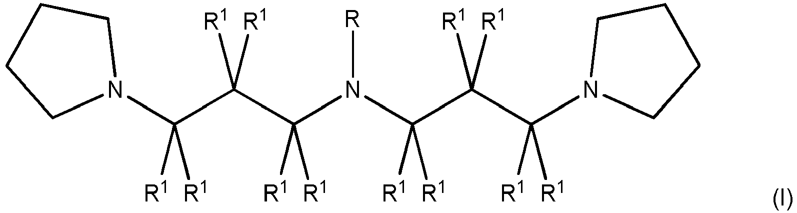 mit
R gleich oder verschieden Wasserstoff oder organischer Rest mit 1 bis 60 Kohlenstoffatomen, der optional Heteroatome, wie z. B. Sauerstoff-, Stickstoff- und/oder Halogenatome, aufweisen kann,
R¹ gleich oder verschieden Wasserstoff oder organischer Rest mit 1 bis 30 Kohlenstoffatomen, der optional Sauerstoff-, Stickstoff- und/oder Halogenatome aufweisen kann,
oder eine entsprechende quaternisierte oder protonierte Verbindung ist.

2. Verwendung nach Anspruch 1, **dadurch gekennzeichnet, dass** die Verbindung der Formel (I) der Formel (II) genügt 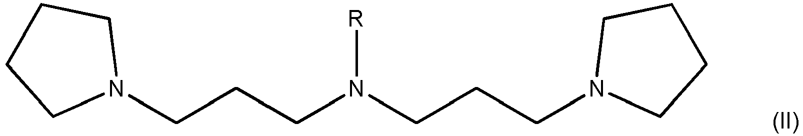 mit R wie in Anspruch 1 definiert, oder eine entsprechende quaternisierte oder protonierte Verbindung ist.

3. Verwendung nach Anspruch 1 oder 2, **dadurch gekennzeichnet, dass** der Rest R in den Verbindungen der Formeln (I) oder (II) oder den entsprechenden quaternisierten oder protonierten Verbindungen ein Rest der Formel
-(CH₂-CHR²-O)_{y}-R³ (VI), 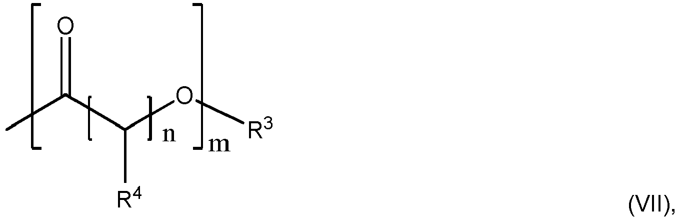 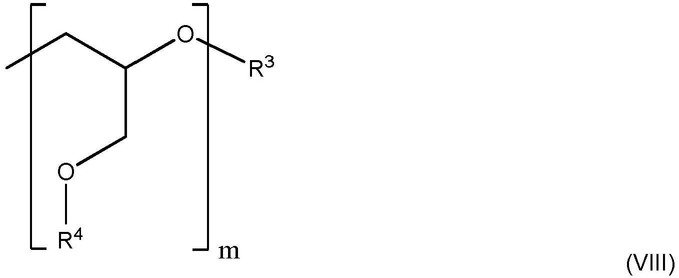
oder 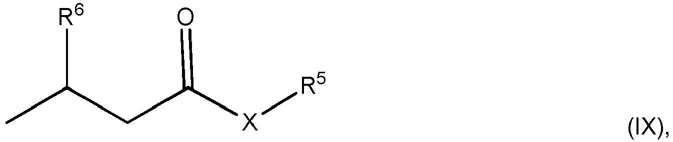 mit
m = 1 bis 20
n = 1 bis 36
y gleich oder verschieden 1 bis 10, vorzugsweise 2 bis 5,
X = O oder NH
R² = gleich oder verschieden -H, -CH₃, -CH₂CH₃ oder Phenyl-Rest, bevorzugt Wasserstoff,
R³ = gleich oder verschieden -H, oder -Alkyl, vorzugsweise C₁- bis C₄₀-Alkyl, Esterfunktionen, Urethanfunktionen oder Amidfunktionen aufweisende Reste, bevorzugt H oder C₁- oder C₆- bis C₃₀-Alkyl, besonders bevorzugt Wasserstoff.
R⁴ = C₁ bis C₂₂-Alkyl-, Aryl- oder Alkylarylrest
R⁵ = H, C₁ bis C₂₂-Alkyl-, Aryl- oder Alkylarylrest, der optional auch noch OH-Funktionen enthalten kann,
R⁶ = H oder ein Rest der Formel (X): 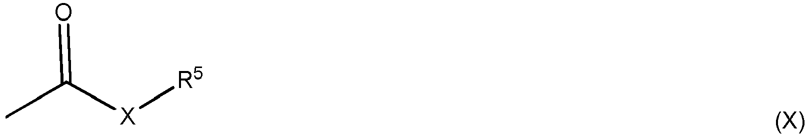 mit
R⁵ und X wie oben definiert.

4. Verwendung nach Anspruch 1 oder 2, **dadurch gekennzeichnet, dass** die Verbindung der Formel (I) der Formel (III) genügt 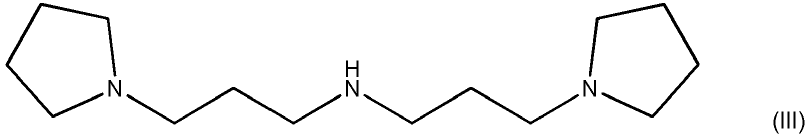 oder eine entsprechende quaternisierte oder protonierte Verbindung ist.

5. Verwendung nach zumindest einem der Ansprüche 1 bis 3, **dadurch gekennzeichnet, dass** der Rest R ein organischer Rest ist, der gegenüber einer Isocyanatgruppe reaktiv ist.

6. Verwendung nach zumindest einem der Ansprüche 1 bis 4, **dadurch gekennzeichnet, dass** die Verbindung nach zumindest einem der Ansprüche 1 bis 3 bei der Herstellung von Polyurethanen als Katalysator eingesetzt wird.

7. Verwendung nach zumindest einem der Ansprüche 1 bis 5, **dadurch gekennzeichnet, dass** Polyurethanschaum hergestellt wird.

8. Verwendung nach mindestens einem der Ansprüche 1 bis 6, **dadurch gekennzeichnet, dass** bei der Herstellung des Polyurethans eine Zusammensetzung hergestellt wird, die zumindest eine Verbindung nach einer der Formeln (I) bis (III) oder eine entsprechende quaternisierte oder protonierte Verbindung, zumindest eine Polyolkomponente, zumindest eine Isocyanatkomponente sowie optional ein oder mehrere Treibmittel aufweist, und diese Zusammensetzung reagiert wird.

9. Zusammensetzung enthaltend mindestens eine Polyolkomponente, **dadurch gekennzeichnet, dass** die Zusammensetzung zumindest eine Verbindung der Formel (I), (II) oder (III), wie in den Ansprüchen 1 bis 5 definiert, oder die entsprechenden quaternisierten oder protonierten Verbindungen aufweist.

10. Zusammensetzung nach Anspruch 9, **dadurch gekennzeichnet, dass** sie mindestens eine Isocyanatkomponente aufweist.

11. Zusammensetzung nach Anspruch 9 oder 10, **dadurch gekennzeichnet, dass** das molare Verhältnis von Verbindungen der Formel (I), (II) oder (III) oder der entsprechenden quaternisierten oder protonierten Verbindungen zu gegenüber Isocyanaten reaktiven Gruppen der Polyolkomponente von 4 x 10⁻⁴ zu 1 bis 0,2 zu 1 beträgt.

12. Zusammensetzung nach zumindest einem der Ansprüche 9 bis 11, **dadurch gekennzeichnet, dass** sie ein oder mehrere Treibmittel aufweist.

13. Polyurethansystem, **dadurch gekennzeichnet, dass** es durch eine Verwendung gemäß einem der Ansprüche 1 bis 8 erhältlich ist.

14. Polyurethansystem nach Anspruch 13, **dadurch gekennzeichnet, dass** es ein Polyurethanhartschaum, ein Polyurethanweichschaum, ein viskoelastischer Schaum, ein High Resilience Schaum, ein halbharter Polyurethanschaum, ein thermoverformbarer Polyurethanschaum oder ein Integralschaum ist.

15. Polyurethansystem nach Anspruch 13 oder 14, **dadurch gekennzeichnet, dass** es einen Massenanteil an Verbindungen der Formel (I) bzw. der durch Umsetzung dieser erhaltenen Reste am fertigen Polyurethanschaum von 0,005 bis 10 Gew.-% aufweist.

## Claims

1. Use in polyurethane production of a nitrogenous compound, **characterized in that** said compound conforms to formula (I) 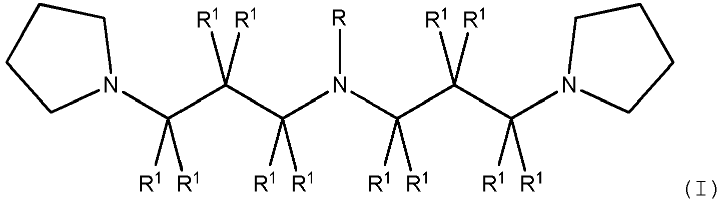 where
R in each occurrence is the same or different and represents hydrogen or an organic moiety of 1 to 60 carbon atoms with or without heteroatoms, for example oxygen, nitrogen and/or halogen atoms,
R¹ in each occurrence is the same or different and represents hydrogen or an organic moiety of 1 to 30 carbon atoms with or without oxygen, nitrogen and/or halogen atoms,
or is a corresponding quaternized or protonated compound.

2. Use according to Claim 1, **characterized in that** the compound of formula (I) conforms to formula (II) 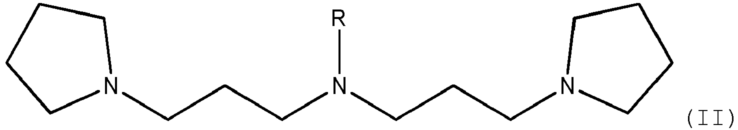 where R is as defined in Claim 1, or is a corresponding quaternized or protonated compound.

3. Use according to Claim 1 or 2, **characterized in that** R in the compounds of formula (I) or (II) or the corresponding quaternized or protonated compounds represents a radical of the formula
- (CH₂-CHR²-O)_{y}-R³ (VI), 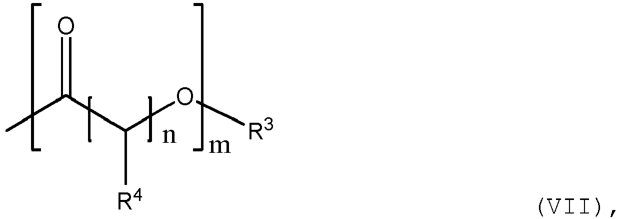 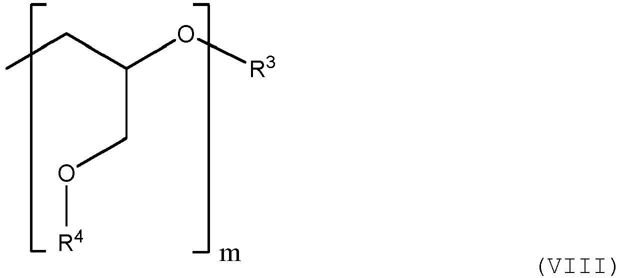
or 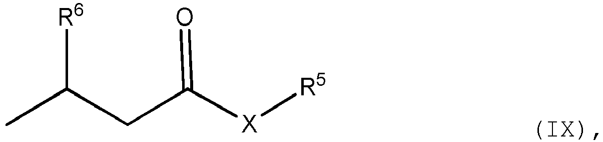 where
m = 1 to 20
n = 1 to 36
y in each occurrence is the same or different and represents 1 to 10, preferably 2 to 5,
X represents O or NH,
R² in each occurrence is the same or different and represents -H, -CH₃, -CH₂CH₃ or phenyl, preferably hydrogen,
R³ in each occurrence is the same or different and represents -H or alkyl, preferably C₁-C₄₀ alkyl, ester moieties, urethane moieties or amide moieties, preferably H or C₁- or C₆-C₃₀ alkyl, more preferably hydrogen,
R⁴ represents C₁-C₂₂ alkyl, aryl or alkylaryl,
R⁵ represents H, C₁-C₂₂ alkyl, aryl or alkylaryl with or without OH functions,
R⁶ represents H or a radical of formula (X): 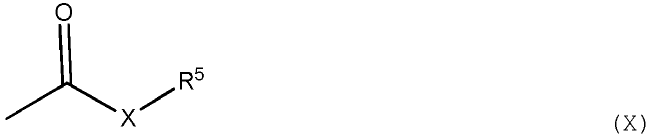 where R⁵ and X are each as defined above.

4. Use according to Claim 1 or 2, **characterized in that** the compound of formula (I) conforms to formula (III) 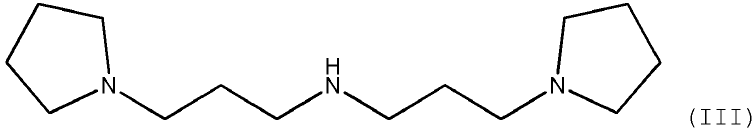 or is a corresponding quaternized or protonated compound.

5. Use according to one or more of Claims 1 to 3, **characterized in that** R is an organic moiety which is reactive with regard to an isocyanate group.

6. Use according to one or more of Claims 1 to 4, **characterized in that** the compound according to one or more of Claims 1 to 3 is used as a catalyst in the manufacture of polyurethanes.

7. Use according to one or more of Claims 1 to 5, **characterized in that** polyurethane foam is manufactured.

8. Use according to one or more of Claims 1 to 6, **characterized in that** the process of manufacturing the polyurethane comprises preparing a composition comprising at least a compound according to any one of formulae (I) to (III) or a corresponding quaternized or protonated compound, at least a polyol component, at least an isocyanate component and also optionally one or more blowing agents, and reacting this composition.

9. Composition containing at least one polyol component, **characterized in that** the composition includes at least a compound of formula (I), (II) or (III), as defined in Claims 1 to 5, or the corresponding quaternized or protonated compounds.

10. Composition according to Claim 9, **characterized in that** it includes at least one isocyanate component.

11. Composition according to Claim 9 or 10, **characterized in that** the molar ratio of compounds of formula (I), (II) or (III) or of corresponding quaternized or protonated compounds to isocyanate-reactive groups of the polyol component is in the range from 4 x 10⁻⁴ : 1 to 0.2 : 1.

12. Composition according to one or more of Claims 9 to 11, **characterized in that** it includes one or more blowing agents.

13. Polyurethane system, **characterized in that** it is obtainable by a use according to any one of Claims 1 to 8.

14. Polyurethane system according to Claim 13, **characterized in that** it is a rigid polyurethane foam, a flexible polyurethane foam, a viscoelastic foam, a high-resilience foam, a semi-rigid polyurethane foam, a thermoformable polyurethane foam or an integral foam.

15. Polyurethane system according to Claim 13 or 14, **characterized in that** it includes a 0.005 to 10 wt% mass fraction of compounds of formula (I), or of moieties obtained by conversion thereof, based on the final polyurethane foam.

## Revendications

1. Utilisation d'un composé azoté lors de la fabrication de polyuréthanes, **caractérisée en ce qu'**il satisfait la formule (I) 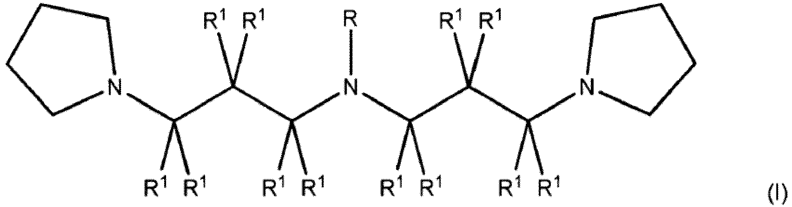 dans laquelle
les R sont identiques ou différents et représentent l'hydrogène ou un radical organique de 1 à 60 atomes de carbone, qui peut éventuellement comprendre des hétéroatomes, tels que p. ex. des atomes d'oxygène, d'azote et/ou d'halogène,
les R¹ sont identiques ou différents et représentent l'hydrogène ou un radical organique de 1 à 30 atomes de carbone, qui peut éventuellement comprendre des atomes d'oxygène, d'azote et/ou d'halogène,
ou est un composé quaternisé ou protoné correspondant.

2. Utilisation selon la revendication 1, **caractérisée en ce que** le composé de formule (I) satisfait la formule (II) 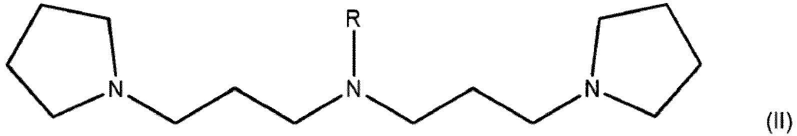 dans laquelle R est tel que défini dans la revendication 1, ou est un composé quaternisé ou protoné correspondant.

3. Utilisation selon la revendication 1 ou 2, **caractérisée en ce que** le radical R dans les composés de formule (I) ou (II) ou les composés quaternisés ou protonés correspondants est un radical de formule
-(CH₂-CHR²-O)_{y}-R³ (VI) 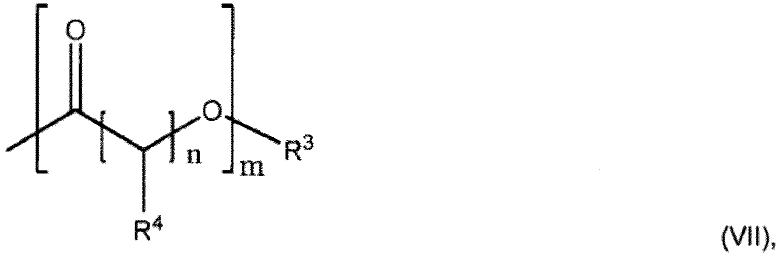 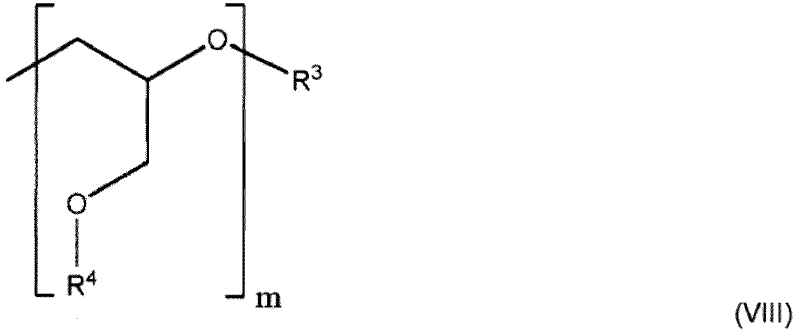
ou 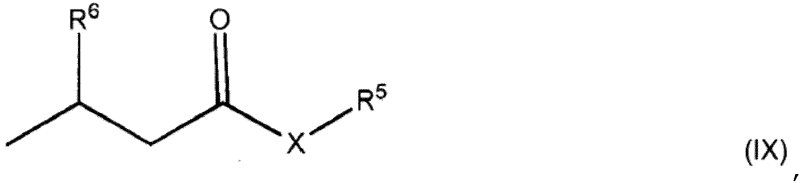 avec
m = 1 à 20,
n = 1 à 36,
les y sont identiques ou différents et représentent 1 à 10, de préférence 2 à 5,
X = O ou NH,
R² = identiques ou différents, -H, -CH₃, -CH₂CH₃ ou un radical phényle, de préférence l'hydrogène,
R³ = identiques ou différents, -H ou -alkyle, de préférence alkyle en C₁ à C₄₀, radicaux comprenant des fonctions ester, des fonctions uréthane ou des fonctions amide, de préférence H ou alkyle en C₁ ou C₆ à C₃₀, de manière particulièrement préférée l'hydrogène,
R⁴ = radical alkyle, aryle ou alkylaryle en C₁ à C₂₂, R⁵ = H, radical alkyle, aryle ou alkylaryle en C₁ à C₂₂, qui peut éventuellement également contenir des fonctions OH,
R⁶ = H ou un radical de formule (X) : 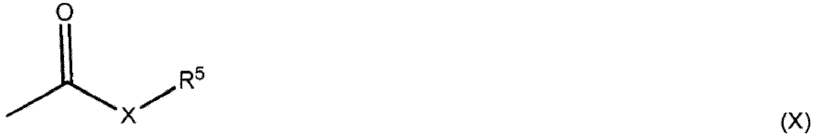 dans laquelle
R⁵ et X sont tels que définis précédemment.

4. Utilisation selon la revendication 1 ou 2, **caractérisée en ce que** le composé de formule (I) satisfait la formule (III) 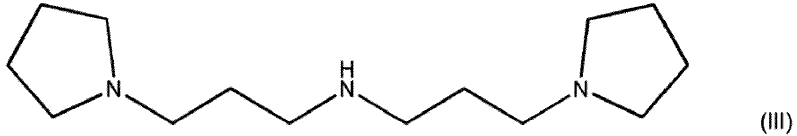 ou est un composé quaternisé ou protoné correspondant.

5. Utilisation selon au moins l'une quelconque des revendications 1 à 3, **caractérisée en ce que** le radical R est un radical organique, qui est réactif avec un groupe isocyanate.

6. Utilisation selon au moins l'une quelconque des revendications 1 à 4, **caractérisée en ce que** le composé selon au moins l'une quelconque des revendications 1 à 3 est utilisé en tant que catalyseur lors de la fabrication de polyuréthanes.

7. Utilisation selon au moins l'une quelconque des revendications 1 à 5, **caractérisée en ce qu'**une mousse de polyuréthane est fabriquée.

8. Utilisation selon au moins l'une quelconque des revendications 1 à 6, **caractérisée en ce que**, lors de la fabrication du polyuréthane, une composition est fabriquée, qui comprend au moins un composé selon l'une des formules (I) à (III) ou un composé quaternisé ou protoné correspondant, au moins un composant polyol, au moins un composant isocyanate, et éventuellement un ou plusieurs agents gonflants, et cette composition est mise en réaction.

9. Composition contenant au moins un composant polyol, **caractérisée en ce que** la composition comprend au moins un composé de formule (I), (II) ou (III), tel que défini dans les revendications 1 à 5, ou les composés quaternisés ou protonés correspondants.

10. Composition selon la revendication 9, **caractérisée en ce qu'**elle comprend au moins un composant isocyanate.

11. Composition selon la revendication 9 ou 10, **caractérisée en ce que** le rapport molaire entre les composés de formule (I), (II) ou (III) ou les composés quaternisés ou protonés correspondants et les groupes réactifs avec les isocyanates du composant polyol est de 4 x 10⁻⁴ sur 1 à 0,2 sur 1.

12. Composition selon au moins l'une quelconque des revendications 9 à 11, **caractérisée en ce qu'**elle comprend un ou plusieurs agents gonflants.

13. Système de polyuréthane, **caractérisé en ce qu'**il peut être obtenu par une utilisation selon l'une quelconque des revendications 1 à 8.

14. Système de polyuréthane selon la revendication 13, **caractérisé en ce qu'**il s'agit d'une mousse dure de polyuréthane, d'une mousse souple de polyuréthane, d'une mousse viscoélastique, d'une mousse à résilience élevée, d'une mousse de polyuréthane semi dure, d'une mousse de polyuréthane déformable thermiquement ou d'une mousse intégrale.

15. Système de polyuréthane selon la revendication 13 ou 14, **caractérisé en ce qu'**il présente une proportion en masse de composés de formule (I) ou de radicaux obtenus par mise en réaction de ceux-ci dans la mousse de polyuréthane finie de 0,005 à 10 % en poids.
